# EUROPÄISCHE PATENTSCHRIFT

(11) **EP 1 806 249 B1**
(45) Veröffentlichungstag und Bekanntmachung des Hinweises auf die Patenterteilung: **11.02.2009**
(21) Anmeldenummer: 06025508.0
(22) Anmeldetag: 09.12.2006
(51) Int. Cl.: B60H 3/00

(54) **Verfahren und Vorrichtung zur Erfassung des Zustands eines Luftfilters einer Klimaanlage**
Method and device for measuring the status of an air conditioning system air filter
Procédé et dispositif destinés à la saisie de l'état d'un filtre à air dans une installation de conditionnement d'air

(30) Priorität: 05.01.2006 DE 102006000842
(43) Veröffentlichungstag der Anmeldung: 11.07.2007
(73) Patentinhaber: Hella KGaA Hueck & Co., 59552 Lippstadt (DE)
(72) Erfinder: Niemann, Thomas, 27753 Delmenhorst (DE); Heilenkötter, Carsten, 28844 Weyhe (DE)
(74) Vertreter: Siekmann, Gunnar

(56) Entgegenhaltungen:
- EP-B1- 0 908 341
- WO-A-86/04553

## Beschreibung

Die Erfindung betrifft ein Verfahren zur Erfassung des Zustands eines Luftfilters in einer Klimaanlage für den Innenraum eines Kraftfahrzeugs. Weiterhin betrifft die Erfindung eine entsprechende Vorrichtung zur Durchführung des Verfahrens zur Erfassung des Zustands eines Luftfilters einer Klimaanlage für den Innenraum eines Kraftfahrzeugs und auch eine Klimaanlage für ein Kraftfahrzeug.

In derartigen Klimaanlagen sind Luftfilter wie z.B. Pollenfilter oder insbesondere auch Aktivkohlefilter integriert. Insbesondere bei Aktivkohlefiltern besteht ein Problem darin, daß diese zwar hervorragend zur Aufnahme von Schadstoffen geeignet sind, jedoch nur ein endliches Aufnahmevermögen aufweisen. Wenn nun ein Aktivkohlefilter an die Grenze seiner Aufnahmefähigkeit gelangt, so beginnt er, bereits aufgenommene Schadstoffe wieder abzugeben. Es ist daher notwendig, den Filter vorher auszutauschen. Auch bei anderen Filtern läßt das Filtervermögen nach einer längeren Einsatzzeit nach bzw. wird der Luftwiderstand höher und die Leistungsfähigkeit der Klimaanlage beeinträchtigt. Aus der EP 0908341 B1 ist bekannt, einen Parameter der durch den Filter tretenden Luft zu erfassen und diesen Wert mit einem Referenzwert zu vergleichen und daraus zu bestimmen, ob der Filter zu ersetzen ist oder nicht. Aus der WO 86/044553 A ist eine Klimaanlage für ein Kraftfahrzeug beschrieben, die sensorgesteuert geschaltet ist.

Der Erfindung liegt die Aufgabe zugrunde, ein Verfahren und eine Vorrichtung der eingangs genannten Art zu schaffen, mit denen eine besonders einfache und zuverlässige Überprüfung möglich ist.

Die Lösung dieser Aufgabe erfolgt mit einem Verfahren mit den Merkmalen des Patentanspruchs 1 und mit einer Vorrichtung mit den Merkmalen des Patentanspruchs 6. Vorteilhafte Weiterbildungen der Erfindung sind in den Unteransprüchen angegeben.

Beim Verfahren zur Erfassung des Zustands eines Luftfilters in einer Klimaanlage für den Innenraum eines Kraftfahrzeugs ist es erfindungsgemäß vorgesehen, das in der Klimaanlage entstehende Kondenswasser einem Sensor zuzuführen, der Sensor dann mindestens eine physikalische Eigenschaft des Kondenswassers erfaßt und aus dem vom Sensor erfaßten Wert eine Aussage über den Zustand des Luftfilters abzuleiten. Die Erfindung realisiert den Gedanken, daß die aus der Umgebung angesaugte Luft in der Klimaanlage bzw. dem HVAC-System zunächst durch einen Filter, beispielsweise einen Pollenfilter oder einen Aktivkohlefilter, geführt wird und dann durch den Verdampfer der Klimaanlage geführt wird, der die Temperatur der Luft herabkühlt. Dabei kondensiert in der Luft enthaltene Feuchtigkeit am Verdampfer und wird als Kondenswasser abgeführt. Dieses hinter dem zu überprüfenden Filter entstehende Kondenswasser enthält daher in einem Umfang Schadstoffe oder Schmutzpartikel, der direkt mit dem Zustand des Filters korreliert ist. Erfindungsgemäß wird daher vorgeschlagen, nicht die Luft, sondern das Kondenswasser zu untersuchen, da dies vergleichsweise einfach erfolgen kann.

Bevorzugt erfaßt der Sensor eine physikalische Größe des Kondenswasser bzw. eine Parameter, der durch ein oder mehrere physikalische Größen des Kondenswassers bestimmt ist, wie z.B. Dichte, Permeabilität, Viskosität und Temperatur. Bevorzugt wird ein elektrisches Feld ausgebildet, das durch das in dieses elektrische Feld geleitete Kondenswasser beeinflußt wird, wobei der Sensor eine Änderung des elektrischen Feldes erfaßt. In einer anderen bevorzugten Ausgestaltung der Erfindung erfaßt der Sensor ein sich änderndes Schwingungsverhalten eines schwingenden Elementes in dem Kondenswasser. Hierzu wird beispielsweise eine Tuning Fork bzw. eine Stimmgabel verwendet. Auch andere Messverfahren zur Erfassung von Parametern oder physikalischen Eigenschaften des Kondenswassers sind möglich.

In einer bevorzugten Ausgestaltung der Erfindung wird der erfaßte Wert auf eine zeitliche Änderung des erfaßten Wertes überprüft. Alternativ wird der erfaßte Wert mit einem Referenzwert verglichen. Aus der Änderung des erfaßten Wertes oder aus der Abweichung zu dem Referenzwert wird dann eine Aussage über den Zustand des Filters abgeleitet.

Bei der Vorrichtung zur Erfassung des Zustands eines Luftfilters einer Klimaanlage für den Innenraum eines Kraftfahrzeugs, die insbesondere zur Durchführung des obengenannten Verfahrens dient, ist es erfindungswesentlich, daß in der Kondenswasserableitug der Vorrichtung ein Sensor zur Bestimmung eines Parameters des Kondenswassers angeordnet ist.

Bevorzugt ist der Sensor im Bodenbereich eines Behälters angeordnet, der mit ablaufenden Kondenswasser gefüllt wird, wobei der Behälter seinerseits einen weiteren Ablauf aufweist. Bevorzugt ist in dem Behälter ein Füllstandssensor integriert, der den Füllstand überprüft und damit sicherstellt, daß der Abfluß des Kondensats erfolgt.

Der Sensor dient bevorzugt zur Erfassung physikalischer Eigenschaften des Wassers, wie insbesondere der Dichte, der Permeabilität, der Viskosität und der Temperatur bzw. eines Parameters, der von diesen Werten beeinflußt wird, die ihrerseits wieder durch die Inhaltsstoffe des Wassers und insbesondere auch durch Schmutzpartikel beeinflußt werden. Bevorzugt weist der Sensor eine Kapazität auf. Mit dieser kann ein in dem Behälter angelegtes elektrisches Feld bzw. dessen Änderung erfaßt werden. In einer anderen bevorzugten Ausführungsform weist der Sensor einen interdigitalen Resistor auf, mit dem ebenfalls ein in dem Behälter angelegtes elektrisches Feld bzw. dessen Änderung erfaßt wird. Interdigitale Resistoren bestehen im wesentlichen aus zwei voneinander isolierten Leitern, die mit Vorsprüngen kammartig versetzt ineinandergreifen. In einer anderen bevorzugten Ausführungsform weist der Sensor ein schwingendes Element, beispielsweise eine Tuning Fork oder eine Stimmgabel auf, deren Frequenzverhalten abhängig von den Eigenschaften des umgebenden Kondenswassers sind.

Ein weiterer Aspekt der Erfindung besteht in der Bereitstellung einer Klimaanlage für ein Kraftfahrzeug, wobei die Klimaanlage einen Luftfilter und einen Kondenswasserablauf am Verdampfer aufweist und im Kondenswasserablauf ein Sensor der obengenannten Art angeordnet ist. Ein zusätzlicher Aspekt der Erfindung besteht in der Bereitstellung eines Kraftfahrzeugs mit einer Klimaanlage, wobei die Klimaanlage einen Luftfilter und einen Kondenswasserablauf am Verdampfer aufweist und im Kondenswasserablauf ein Sensor der obengenannten Art angeordnet ist.

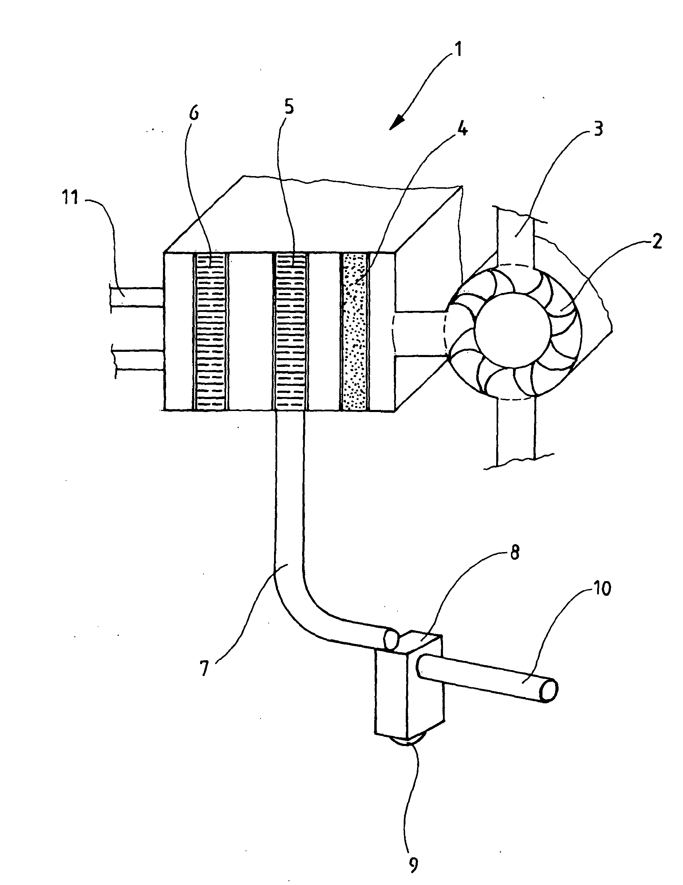

Nachfolgend wird die Erfindung anhand eines in der Zeichnung dargestellten bevorzugten Ausführungsbeispiels weiter erläutert.

In der einzigen Fig. der Zeichnung ist ein Teil einer Klimaanlage 1 in einem HVAC-System 1 (Heating Ventilating, Airconditioning) dargestellt. In diesem HVAC-System 1 wird im rechten Bereich Luft über eine Zuführung 3 mit einem Lüfter 2 in das System geführt, das einen Filter 4, einen Verdampfer 5 der Klimaanlage und in der Regel auch einen Wärmetauscher 6 zum eventuellen Erwärmen der durchgeführten Luft aufweist. Im linken Bereich wird die Luft durch Rohre 11 zu den Gebläsedüsen geführt. Die Klimaanlage selbst umfaßt neben dem Verdampfer noch weitere, hier nicht dargestellte Bauteile, nämlich im wesentlichen einen Kondensator, eine Pumpe zum Antreiben des Kältemittels und einen Kompressor zum Verdichten des Kältemittels. Typischerweise unterhalb des Verdampfers 5 der Klimaanlage ist eine Ableitung 7 für Kondenswasser vorgesehen. Diese füllt einen Behälter 8, in dem ein Sensor 9 angeordnet ist. Dieser ist bevorzugt im Bodenbereich angeordnet. Der Sensor 9 mißt einen Parameter des Kondenswassers, der durch die physikalischen Größen wie Dichte, Permeabilität, Viskosität und Temperatur des Kondenswasser beeinflußt ist und auch durch den Staub oder Schmutzgehalt des Kondenswassers beeinflußt ist. Bei einer vorbestimmten Änderung des Messwerts oder einer vorbestimmten Abweichung von einem Referenzwert erkennt eine zugehörige Elektronik dies und leitet daraus eine Aussage über den Zustand des Sensors ab. Die Elektronik ist bevorzugt in dem Gehäuse des HVAC-Systems 1 integriert. In dem Behälter 8 ist bevorzugt auch ein Füllstandssensor angeordnet, der sicherstellt, daß über die Leitung 10 tatsächlich auch der Abfluß des Kondenswassers erfolgt.

## Patentansprüche

1. Verfahren zur Erfassung des Zustands eines Luftfilters in einer Klimaanlage für den Innenraum eines Kraftfahrzeugs,
**dadurch gekennzeichnet,**
**daß** das am Verdampfer (5) der Klimaanlage entstehende Kondenswasser einem Sensor (9) zugeführt wird,
**daß** der Sensor (9) mindestens eine physikalische Eigenschaft des Kondenswassers erfaßt und
**daß** aus dem vom Sensor (9) erfaßten Wert eine Aussage über den Zustand des Luftfilters (4) abgeleitet wird.

2. Verfahren nach Anspruch 1, **dadurch gekennzeichnet, daß** der Sensor (9) eine Änderung eines elektrischen Feldes erfaßt.

3. Verfahren nach Anspruch 1, **dadurch gekennzeichnet, daß** der Sensor ein sich änderndes Schwingungsverhalten einer Tuning Fork erfaßt.

4. Verfahren nach einem der vorhergehenden Ansprüche, **dadurch gekennzeichnet, daß** die erfaßten Werte auf eine zeitliche Änderung des erfaßten Wertes überprüft werden.

5. Verfahren nach einem der Ansprüche 1 bis 3, **dadurch gekennzeichnet, daß** der erfaßte Wert mit einem Referenzwert verglichen wird.

6. Vorrichtung zur Erfassung des Zustands eines Luftfilters einer Klimaanlage für den Innenraum eines Kraftfahrzeugs, insbesondere zur Durchführung des Verfahrens nach einem der vorhergehenden Ansprüche,
**dadurch gekennzeichnet,**
**daß** die Vorrichtung eine Kondenswasserableitung (7) aufweist, in der ein Sensor (9) zur Erfassung mindestens einer physikalischen Eigenschaft des Kondenswassers angeordnet ist.

7. Vorrichtung nach Anspruch 6, **dadurch gekennzeichnet, daß** der Sensor (7) zur Erfassung mehrerer physikalischer Eigenschaften des Kondenswassers ausgebildet ist.

8. Vorrichtung nach einem der Ansprüche 6 oder 7, **dadurch gekennzeichnet, daß** der Sensor (9) eine Kapazität aufweist.

9. Vorrichtung nach einem der Ansprüche 6 oder 7, **dadurch gekennzeichnet, daß** der Sensor einen interdigitalen Resistor aufweist.

10. Vorrichtung nach einem der Ansprüche 6 oder 7, **dadurch gekennzeichnet, daß** der Sensor eine Tuning Fork aufweist.

11. Vorrichtung nach einem der Ansprüche 6 bis 10, **dadurch gekennzeichnet, daß** der Sensor (9) in einem Behälter (8) angeordnet ist, wobei der Behälter (8) an die Kondenswasserableitung (7) angeschlossen ist.

12. Vorrichtung nach Ansprüch 11, **dadurch gekennzeichnet, daß** in dem Behälter (8) ein Füllstandssensor vorgesehen ist.

13. Klimaanlage für ein Kraftfahrzeug mit einem Verdampfer, einem Luftfilter und einem im Bereich des Verdampfers angeordneten Kondenswasserablauf, **dadurch gekennzeichnet, daß** in dem Kondenswasserablauf ein Sensor (9) zur Erfassung mindestens einer physikalischen Eigenschaft des Kondenswassers angeordnet ist.

14. Kraftfahrzeug mit einer Klimaanlage nach Anspruch 13.

## Claims

1. A method for detecting the condition of an air filter in an air conditioning system for the passenger compartment of a motor vehicle,
**characterized in that**
condensed water resulting at the evaporator (5) of the air conditioner is supplied to a sensor (9),
said sensor (9) detects at least one physical property of the condensed water and
information is derived about the condition of the air filter (4).

2. The method according to claim 1, **characterized in that** said sensor (9) detects a change of an electrical field.

3. The method according to claim 1, **characterized in that** said sensor detects a changing oscillation behaviour of a tuning fork.

4. The method according to one of the preceding claims, **characterized in that** the detected values are examined for a temporal change of the detected value.

5. The method according to one of the claims 1 to 3, **characterized in that** the detected value is compared with a reference value.

6. A device for detecting the condition of an air filter of an air conditioning system for the passenger compartment of a motor vehicle, in particular, for carrying out the method according to one of the preceding claims,
**characterized in that**,
said device comprises a condensed water discharge (7) in which a sensor (9) is arranged for detecting at least one physical property of the condensed water.

7. The device according to claim 6, **characterized in that** said sensor (9) is configured for detecting a plurality of physical properties of the condensed water.

8. The device according to one of the claims 6 or 7, **characterized in that** said sensor (9) comprises a capacitance.

9. The device according to one of the claims 6 or 7, **characterized in that** said sensor comprises an interdigital resistor.

10. The device according to one of the claims 6 or 7, **characterized in that** said sensor comprises a tuning fork.

11. The device according to one of the claims 6 to 10, **characterized in that** said sensor (9) is arranged in a container (8) to which said condensed water discharge (7) is connected.

12. The device according to claim 11, **characterized in that** a filling level sensor is provided in said container (8).

13. An air conditioner for a motor vehicle with an evaporator, an air filter and a condensed water discharge arranged in the region of the evaporator, **characterized in that** a sensor (9) for detecting at least one physical property of the condensed water is arranged in the condensed water discharge.

14. The motor vehicle with an air conditioning system according to claim 13.

## Revendications

1. Procédé de détection de l'état d'un filtre à air dans une installation de climatisation destinée à l'espace interne d'un véhicule automobile,
**caractérisé en ce que**
l'eau de condensation générée sur l'évaporateur (5) de l'installation de climatisation est introduite dans un capteur (9),
le capteur (9) détecte au moins une propriété physique de l'eau de condensation et
un renseignement concernant l'état du filtre à air (4) est déduit de la valeur détectée par le capteur (9)

2. Procédé selon la revendication 1, **caractérisé en ce que** le capteur (9) détecte une variation d'un champ électrique.

3. Procédé selon la revendication 1, **caractérisé en ce que** le capteur détecte un comportement d'oscillation variable d'un diapason.

4. Procédé selon une des revendications précédentes, **caractérisé en ce que** les valeurs détectées sont contrôlées afin de rechercher une variation temporelle de la valeur détectée.

5. Procédé selon une des revendications 1 à 3, **caractérisé en ce que** la valeur détectée est comparée avec une valeur de référence.

6. Dispositif de détection de l'état d'un filtre à air d'une installation de climatisation destinée à l'espace interne d'un véhicule automobile, notamment pour mettre en oeuvre le procédé selon une des revendications précédentes,
**caractérisé en ce que** le dispositif présente une conduite d'évacuation de l'eau de condensation, dans laquelle un capteur (9) pour détecter au moins une propriété physique de l'eau de condensation est disposé.

7. Dispositif selon la revendication 6, **caractérisé en ce que** le capteur (9) est conçu afin de détecter plusieurs propriétés physiques de l'eau de condensation.

8. Dispositif selon une des revendications 6 ou 7, **caractérisé en ce que** le capteur (9) présente une capacité.

9. Dispositif selon une des revendications 6 ou 7, **caractérisé en ce que** le capteur présente une résistance interdigitée.

10. Dispositif selon une des revendications 6 ou 7, **caractérisé en ce que** le capteur présente un diapason.

11. Dispositif selon une des revendications 6 à 10, **caractérisé en ce que** le capteur (9) est disposé dans un contenant (8), moyennant quoi le contenant (8) est raccordé à la conduite d'évacuation d'eau de condensation (7).

12. Dispositif selon la revendication 11, **caractérisé en ce que** un capteur d'état de remplissage est prévu dans le contenant (8).

13. Installation de climatisation d'un véhicule automobile comportant un évaporateur, un filtre à air et une conduite d'évacuation d'eau de condensation disposée au niveau de l'évaporateur, **caractérisée en ce que** un capteur (9) pour détecter au moins une propriété physique de l'eau de condensation (2) est disposé dans la conduite d'évacuation d'eau de condensation.

14. Véhicule automobile comportant une installation de climatisation selon la revendication 13.
